(19) Europäisches Patentamt
European Patent Office
Office européen des brevets

(11) **EP 2 552 674 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **11719160.1**

(22) Anmeldetag: **28.03.2011**

(51) Int Cl.:
***B29C 67/00*** *(2006.01)*

(86) Internationale Anmeldenummer:
**PCT/DE2011/000341**

(87) Internationale Veröffentlichungsnummer:
**WO 2011/120505 (06.10.2011 Gazette 2011/40)**

(54) **VORRICHTUNG ZUM HERSTELLEN DREIDIMENSIONALER MODELLE**

DEVICE FOR PRODUCING THREE-DIMENSIONAL MODELS

DISPOSITIF POUR LA FABRICATION DE MODÈLES TRIDIMENSIONNELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2010 DE 102010013733**

(43) Veröffentlichungstag der Anmeldung:
**06.02.2013 Patentblatt 2013/06**

(73) Patentinhaber: **voxeljet AG**
**86316 Friedberg (DE)**

(72) Erfinder:
• **HARTMANN, Andreas, Dominik**
**86391 Stadtbergen (DE)**

• **EDERER, Ingo**
**82269 Geltendorf (DE)**

(74) Vertreter: **Helbig, Christian**
**Wagner + Helbig**
**Patentanwälte**
**Pfarrstrasse 14**
**80538 München (DE)**

(56) Entgegenhaltungen:
**EP-A1- 1 872 928       WO-A2-2005/097476**
**WO-A2-2009/037550   DE-C1- 10 053 741**

**Beschreibung**

Die Erfindung bezieht sich auf eine Vorrichtung zum Herstellen dreidimensionaler Modelle mittels 3D-Druckverfahren gemäß dem Oberbegriff des Patentanspruches 1.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine gegebenenfalls mit einem Behälter umfassten Bauplattform aufgetragen und dieses anschließend gemäß Computerdaten selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Das, wie beschrieben, aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Die Bereitstellung eines Baubehälters mit der darin befindlichen, in vertikaler Richtung absenkbaren Bauplattform erfordert jedoch einen hohen technischen Aufwand bei der Abdichtung der Behälterwand gegen die Plattform, um das Partikelmaterial vor dem unkontrollierten Abfließen durch den Spalt zwischen dem Rand der Bauplattform und der Behälterwand zu hindern, da ansonsten die Gefahr besteht, dass die Plattform wegen des gegebenenfalls körnigen Partikelmaterials an der Behälterwand verklemmt.

Ein weiterer Nachteil der absenkbaren Bauplattform liegt in der stetigen Zunahme des zu bewegenden Gewichtes auf der Bauplattform bei voranschreitendem Bauprozess. Insbesondere beim Auftragen der neuen Schicht kann es erforderlich sein, dass das Pulverbett um etwas mehr als die Schichtdicke abgesenkt und dann wieder auf das erforderliche Maß angehoben wird, um die Schichtdicke hinreichend genau einstellen zu können. Bei einem solchen revolvierenden Betrieb muss nicht nur das gesamte Gewicht der Pulverschüttung einschließlich Bauplattform, sondern auch die Reibungskräfte des Pulverbettes zur Behälterwandung und die Dichtungsreibung zwischen Bauplattform und Behälterwand überwunden werden. Dies führt insbesondere bei großen Baufeldern und hohen Schüttdichten des verwendeten Partikelmaterials zu hohen Belastungen der Führungen und Antriebe.

Hierzu ist es aus der EP 0 644 809 B1 und der DE 10 2006 030 350 A1 bekannt, nicht das Partikelbett relativ zum Arbeitstisch abzusenken sondern stattdessen die Beschichtungsvorrichtung und den Druckkopf zum Auftragen des Partikelmaterials und des Bindemittels relativ zum Partikelbett anzuheben.

Es ist dabei bekannt, dass an einem Tragrahmen über Linearführungen ein Beschichter für Partikelmaterial sowie ein Druckkopf angeordnet sind. Die Linearführungen sind dabei ingesamt einstückig, beipsielsweise über eine Bodenplatte miteinander verbunden, ausgebildet. Dies wird insbesondere gemacht, um eine gute Kraftverteilung zu erreichen.

Darüberhinaus ist es bekannt vier Z-Achsen vorzusehen und alle Z-Achsen mit Verbindungsstreben an der Oberseite und Verbindungsstreben an der Unterseite miteinander zu verbinden. Die Fertigungsgenauigkeiten sind für solche Größen notwendige Abmessungen sehr ungenau und das System ist damit statisch absolut überdefiniert. Gleichzeitig ist es teuer und schwer montierbar.

Da für solche Konstruktionen üblicherweise Schweißkonstruktionen vorgesehen sind, muss ein Z-Achskörper an fast allen Seiten überarbeitet werden. Da die Genauigkeitsanforderungen jedoch sehr hoch sind, ist eine solche Schweißkonstruktion sehr teuer und nur sehr schwer zu erhalten. WO 2005/097476 A2 offenbart eine Vorrichtung zum 3D Drucken, die eine Bauplattform und einen um diese angeordnete Tragrahmen aufweist, an dem eine Dosiervorrichtung für Partikelmaterial und eine Verfestigungseinrichtung angebracht sind, wobei der Tragrahmen in Z-Richtung verfahrbar ist. Der Gegenstand der Erfindung wird aber weder beschrieben noch nahe gelegt.

EP 1 872 928 A1 offenbart eine Vorrichtung und ein Verfahren zum Aufbauen eines Schichtkörpers aus Partikelmaterial, wobei eine Dosiervorrichtung auf einem Rahmen verfahren wird und schrittweise vertikal verstellbar ist und vor dem Auftragen der jeweils obersten Schicht um deren Schichtdicke vertikal nach oben verstellt wird. Der Gegenstand der vorliegenden Anmeldung wird darin weder beschrieben noch nahe gelegt.

DE 100 53 741 C1 offenbart eine Vorrichtung mit höhenverfahrbarer Werkstückplattform mit entnehmbarer Prozessplattform-Wechseleinheit. Der Gegenstand der vorliegenden Anmeldung wird darin weder beschrieben noch nahe gelegt.

Ausgehend hiervon ist es daher Aufgabe der vorliegenden Erfindung bei einer Vorrichtung der eingangs genannten Art eine einfach montier- und einstellbare, genaue Z-Achsenverschiebung des Beschichters des Partikelmaterials und des Druckkopfes zu ermöglichen.

Diese Aufgabe wird durch eine Vorrichtung gemäß dem Patentanspruch 1 gelöst.

Gemäß der vorliegenden Erfindung wird eine Vorrichtung zum Herstellen dreidimensionaler Modelle mittels 3-D Druckverfahren beschrieben, wobei eine Bauplattform zum Aufbringen von Baumaterial vorgesehen ist und ein Tragrahmen um die Bauplattform angeordnet ist, an dem über Linearführungen zumindest eine Dosiervorrichtung für Partikelmaterial und eine Verfestigungseinrichtung für Partikelmaterial angebracht sind und der Tragrahmen in einer Z-Richtung, das heißt im wesentlichen senkrecht zu einer Grundfläche der Bauplattform verfahrbar ist.

Die Verfahreinheiten stellen gemäß der vorliegenden Erfindung jeweils gesonderte Bauteile dar und sind voneinander unabhängig am Tragrahmen anordenbar und in Lage und Ausrichtung unabhängig voneinander einstellbar.

Als Verfestigungseinrichtung für Partikelmaterial wird gemäß einer bevorzugten Ausführungsform der Erfindung ein Druckkopf zur Dosierung von Flüssigkeitstropfen vorgeschlagen. Diese Flüssigkeit führt bei Kontakt mit dem Partikelmaterial zu dessen lokal begrenzter Verfestigung. Darüberhinaus könnten jedoch auch andere Verfestigungseinrichtungen zum Einsatz kommen, wie zum Beispiel Systeme zur Erzeugung energiereicher Strahlen, beispielsweise Laser, die wiederum am Auftreffpunkt zu einer lokal begrenzten Verfestigung des Partikelmaterials führen.

Der Tragrahmen weist vorzugsweise in Draufsicht eine im Wesentlichen rechteckige Form auf. Dies kann vorteilhaft sein, da 3D-Drucksysteme mit linienförmig ausgeprägten Druckköpfen eine höhere Flächendruckgeschwindigkeit aufweisen, wenn die zu bedruckende Fläche rechteckig ausgeprägt ist und der Druckkopf über die lange Seite druckt. Darüberhinaus erhöht sich die Schwierigkeit mit zunehmender Breite, nicht gebundenes Partikelmaterial vom Baukörper manuell zu entfernen. Es ist daher ratsam auch unter diesem Aspekt die Breite auf eine handhabbare Größe zu beschränken. Als sinnvolle Größe ist ein Bereich von 1 bis 2 m zu nennen. Hier kann das lose Partikelmaterial noch mit einfachen Hilfsmitteln manuell entfernt werden. Größere Dimensionen sind möglich, erfordern aber dann aufwändigere Hilfsmittel wie z.B. begehbare Brücken oder maschinell geführte Reinigungssysteme.

Die Aufhängepunkte des Tragrahmens an den Verfahreinheiten sind dabei vorzugsweise nicht an den Ecken angeordnet. Bei einer großen Dimensionierung des Tragrahmens kann es vorteilhaft sein, weitere Aufhängepunkte vorzusehen.

Es hat sich gezeigt, dass durch die Aufhängung des Tragrahmens an jeweils zwei an der langen Rechteckseite des Tragrahmens angeordneten Aufhängepunkten eine hohe Steifigkeit und Schwingstabilität erreicht werden kann.

Die Verfahreinheiten sind dabei vorzugsweise in Lage und Ausrichtung unabhängig voneinander einstellbar und besonders bevorzugt steht jede Verfahreinheit mit dem Tragrahmen an einem Aufhängepunkt in Eingriff und ist gesondert in Z-Richtung verfahrbar.

Weiterhin kann es vorteilhaft sein, wenn mindestens zwei vertikale Verfahreinheiten über ein Tragwerk verbunden sind. Dabei kann das Tragwerk eventuell elastisch verformbar sein.

Dabei kann es vorgesehen sein, dass jedes Tragwerk und/oder jede vertikale Verfahreinheit mindestens drei vertikal einstellbare Füße aufweist.

Die Vorrichtung kann beispielsweise derart ohne gesondertes Fundament ausgebildet werden, da eine optimale Einleitung der Kräfte in den Boden stattfindet. Dies geschieht beispielsweise mittels einer festen Verbindung der Z-Achse mit dem Boden über, in X-, Y-, Z-Richtung einstellbaren Maschinenfüße.

Hierbei bezeichnet Z die vertikale Richtung, X die horizontale Richtung der längeren Seite des Tragrahmens und Y entsprechend die kürzere Seite des Tragrahmens.

An den Boden werden erfindungsgemäß geringe Anforderungen gestellt. Er muss das Maschinengewicht sicher aufnehmen können ohne sich stark zu verformen. An die Ebenheit und Oberflächengüte werden keine gesonderten Anforderungen gestellt. Ein Betonhallenboden des Stand der Technik ist für den Einsatzzweck ausreichend.

Gemäß einer bevorzugten Ausführungsform der vorliegenden Erfindung sind die Aufhängepunkte die Besselpunkte des Tragrahmens. Bei einer solchen Ausgestaltung wird die statisch geringste Durchbiegung des Tragrahmens erreicht.

Um hohe Genauigkeiten, und eine hohe Stabilität bei niedrigem Gewicht zu erreichen, wird der Tragrahmen vorzugsweise aus Rechteckprofilen aus Stahl gebildet. Andere Bauformen und Materialien wie z.B. Faserverbundwerkstoffe sind ebenfalls ohne Einschränkung der Funktion möglich.

Vorzugsweise ist, wie schon beschrieben, jeder Aufhängepunkt gesondert über eine Verfahreinheit in Z-Richtung verfahrbar.

Eine solche vertikale Verfahreinheit stellt dabei beispielsweise eine Lineareinheit, vorzugsweise aufweisend einen Linearantrieb, einen Antriebsmotor und eine Linearführung, dar.

Um ein möglichst gleichmäßiges Verfahren der vertikalen Verfahreinheiten sicherzustellen, sind die Antriebsmotoren gemäß einer bevorzugten Ausführungsform der Erfindung über ein elektronisches Gantrysystem miteinander gekoppelt.

Jede vertikale Verfahreinheit wird dabei gemäß einer weiteren bevorzugten Ausführungsform von einem eigenen, freistehenden Achsgestell aufgenommen. Derart kann eine Modulbauweise der gesamten Vorrichtung erreicht werden. Die vertikalen Verfahreinheiten können dabei vorteilhafterweise problemlos und unabhängig voneinander getauscht werden.

Um hohe Genauigkeiten und eine hohe Stabilität bei niedrigem Gewicht zu erreichen, wird die tragende Struktur jeder vertikalen Verfahreinheit vorzugsweise aus Leichtmetallplatten gebildet, die verstiftet und/oder verschraubt werden. Dies hat den Vorteil, dass die räumliche Struktur aus relativ einfachen und in einer Aufspannung zu bearbeitenden ebenen Flächen entsteht.

Ein Verzug durch Schweißen oder nachträgliche Bearbeitung findet nicht statt und somit entfällt eine Bearbeitung nach der Montage.

Dieser Vorteil kommt insbesondere bei großen Dimensionen der Vorrichtung zum tragen und führt dabei zu deutlicher Kosteneinsparung gegenüber geschweißten Stahl-Konstruktionen.

Darüberhinaus wäre es auch denkbar, anstelle der Leichtmetallplatten andere Werkstoffe wie beispielsweise Faserverbundwerkstoffe oder Sandwichplatten aus Faserverbundwerkstoffen verwendet werden. Anstelle der Schraubverbindungen wäre es natürlich ebenso möglich, dass andere verzugsfreie Fügeverfahren wie z.B. Kleben oder Nieten zum Einsatz kommen.

Um die großen prozessbedingten Kräfte, Momente und Schwingungen aufzunehmen, sind die Platten gemäß einer weiteren bevorzugten Ausführungsform mit optimierter Kontur und gegebenenfalls in entsprechender Richtung angeordnet.

Dabei kann jede vertikale Verfahreinheit gewichts- und belastungsoptimiert werden.

Als weiterer Vorteil gegenüber Schweißverbindungen können die einzelnen Platten leicht ausgetauscht werden.

Eine derartige aus Leichtmetallplatten gebildete vertikale Verfahreinheit in einer Vorrichtung gemäß der vorliegenden Erfindung ist kostengünstig und gut verfügbar.

Ein weiteres Merkmal der erfindungsgemäßen Vorrichtung ist die räumlich statisch bestimmte Lagerung des Tragrahmens in Bezug auf die vertikalen Verfahreinheiten. Insbesondere bei den gewünschten großen Dimensionen der Vorrichtung können bei unbestimmter Lagerung im ungünstigen Fall z.B. aufgrund eines Temperatureinflusses oder fehlerhafter Einstellung enorme Kräfte in den Lagerstellen auftreten, die zu Verzug und im schlimmsten Fall sogar zum Versagen der Struktur führen können.

Gemäß der vorliegenden Erfindung kann daher darüberhinaus auch vorteilhaft sein, dass der Tragrahmen über Lagerbolzen und Kugelgelenklager mit den vertikalen Verfahreinheiten in Eingriff steht.

Es kann zudem vorzugsweise vorgesehen sein, dass der Eingriff der Lagerbolzen mit den Kugelgelenklagern zumindest teilweise lose ist.

So wäre es beispielsweise vorteilhaft, wenn sich im Tragrahmen Kugelgelenklager befinden, die die Bolzen aufnehmen. Auf einer Seite ist das Lagerbolzenpaar im Gelenklager in Y-Richtung lose gelagert.

Zwei gegenüberliegende Bohrungen für die Gelenklager können im Tragrahmen beispielsweise als Langlöcher in X-Richtung ausgeführt werden. Das Gelenklager mit den Bolzen kann sich in X-Richtung bewegen, es entsteht eine Loslagerung des Tragrahmens in X-Richtung.

Dehnt sich der Rahmen bzw. das Z-Achssystem nun in X oder Y Richtung aus, wird die Änderung von den Loslagern aufgenommen. Sind die Ausdehnungen unterschiedlich, gleichen die Gelenklager weitere Winkelfehler aus.

Verfahren die einzelnen Z-Achsen unterschiedlich, werden die baugrößenbedingten großen Hebelmomente ebenfalls von den Freiheitsgraden der Aufhängungen aufgenommen.

Die Gelenk und Loslagerung gleicht weiterhin Parallelversatzfehler, Winkelfehler und Längenfehler in X- und Y-Richtung der gegenüberliegenden Z-Achspaare aus. Solche Fehler könnten beispielsweise bei der Montage und/oder Fertigung entstehen.

Zudem wird mit einer erfindungsgemäßen Vorrichtung die Montage des Systems erleichtert, da der Tragrahmen bei der Montage noch nicht genau ausgerichtet sein muss.

Bei einer festen Verbindung zwischen der Z-Achse und dem Tragrahmen könnte, durch die Hebelverhältnisse, die Verbindung bereits bei der Montage beschädigt bzw. zerstört werden.

Weiterhin muss gemäß einer erfindungsgemäßen Ausführung nur ein einziger Bolzen pro Z-Achse eingezogen und mit einer einzelnen Schraube fixiert werden. Dies erspart Zeit und Kosten bei Fertigung und Montage. Der Tragrahmen wird dabei wiederum zu einem leicht austauschbaren Modul.

Die Genauigkeit und Steifigkeit des Tragrahmens kann durch die Verwendung hochgenauer Platten, die durch Ihre Kontur und Ausrichtung optimal auf die Belastung eingestellt sind, weiter optimiert werden.

Eine Vorrichtung gemäß der vorliegenden Erfindung kann in Modulbauweise mit wenigen, unabhängigen und identischen Baugruppen die unabhängig optimal ausgerichtet werden können, ausgeführt sein. Durch Wärme, Fertigung, Montage und Verfahrfehler in Z-Richtung erzeugte geometrische Abweichungen können durch eine Gelenkaufhängung und Festloslagerung gemäß der vorliegenden Erfindung auf einfachste Weise ausgeglichen werden.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:

Figur 1a ein Tragrahmen einer erfindungsgemäßen Vorrichtung gemäß einer bevorzugten Ausführungsform in einer seitlichen Ansicht;

Figur 1b eine Draufsicht auf einen Tragrahmen der Fig. 1a;

Figur 2 eine räumliche Darstellung einer bevorzugten erfindungsgemäßen Vorrichtung;

Figur 3 a) bis d) verschiedene Darstellungen der Achskörper und des Bodengestells gemäß einer bevorzugten Ausführungsform der vorliegenden Erfindung;

Figur 4 ein Modell eines Tragrahmens in einer Draufsicht zur Bestimmung von verbleibenden Freiheitsgraden gemäß einer bevorzugten Ausführungsform der Erfindung;

Figur 5 ein Modell einer erfindungsgemäßen Vorrichtung gemäß einer bevorzugten Ausführungform in einer räumlichen Ansicht zur Bestimmung von verbleibenden Freiheitsgraden;

Figur 6 a) und b) eine bevorzugte Ausführungform einer erfindungsgemäßen Vorrichtung mit jeweils drei vertikalen Verfahreinheiten pro Seite; und

Figur 7 a) und b) eine weitere bevorzugte Ausführungsform der erfindungsgemäßen Vorrichtung mit jeweils vier vertikalen Verfahreinheiten pro Seite, aufgeteilt in je zwei Module.

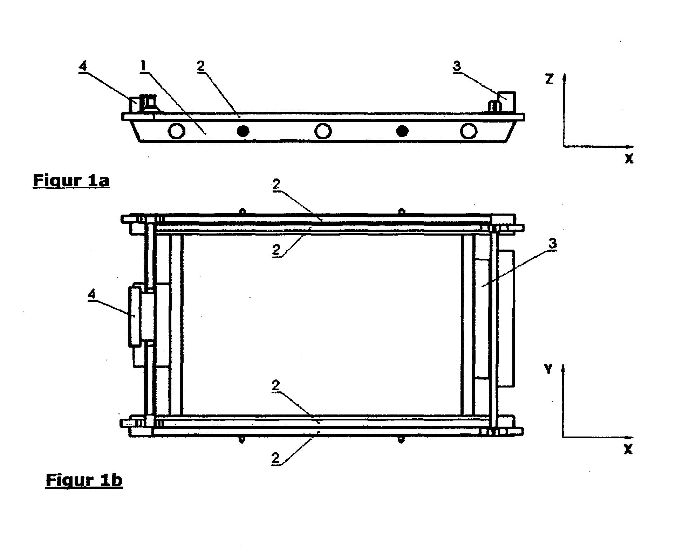

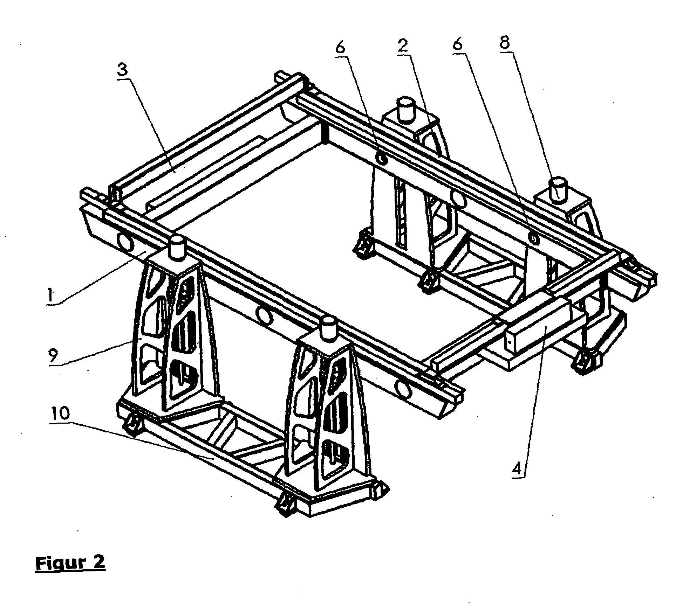

Wie aus den Figuren ersichtlich, wird gemäß einer gezeigten bevorzugten Ausführungsform der vorliegenden Erfindung bei einer Vorrichtung zum Aufbau von dreidimensionalen Modellen ein rechtwinkliger Tragrahmen 1 aus rechtwinkligen Hohlprofilen bereitgestellt, der die Verfahreinheiten in X-Richtung 2 trägt. Diese Verfahreinheiten 2 verfahren den Beschichter 3 und den Druckkopf 4. Dies ist beispielsweise in der Figur 1 und 2 dargestellt. Zusätzlich trägt der Tragrahmen 1 die gesamte Peripherie für das Drucken beziehungsweise Beschichten mit Partikelmaterial.

Ein erfindungsgemäßer Tragrahmen, wie in Figur 1 dargestellt, könnte beispielsweise die Abmessungen (Länge X Breite) 5 m X 3 m aufweisen. Mit allen Elementen bestückt, könnte der Rahmen beispielsweise ein Gewicht von 3 Tonnen aufweisen.

Der Tragrahmen 1 umschließt eine Bereich, das sogenannte Baufeld, in dem das dreidimensionale Objekt erstellt wird. Während des Aufbauprozesses muss der gesamte Tragrahmen 1 inklusive der Peripherie exakt in vertikaler Richtung positioniert werden.

Der Begriff Peripherie umfasst dabei den Druckkopf 3, den Beschichter 4 und alle für deren Betrieb notwendige Komponenten.

Der Tragrahmen 1 wird, wie in der Figur 1, 2 und 3 dargestellt, außen an der langen Seite, an vier Punkten (zwei je Seite) aufgehängt.

Die Aufhängepunkte 6 des Tragrahmens 1 liegen gemäß der gezeigten bevorzugten Ausführungsform in dessen Besselpunkten. Damit kann eine statisch möglichst geringe Durchbiegung des Tragrahmens 1 erreicht werden.

Jeder Aufhängpunkt 6 wird von einer einzelnen Lineareinheit in vertikaler Richtung verfahren. Eine vertikale Verfahreinheit setzt sich aus Linearantrieb, hier beispielsweise einer Gewindespindel und Linearführung, Antriebsmotor 8, und einem Achsgestell 9 zusammen.

Damit jede vertikale Verfahreinheit um den gleichen Weg verfährt, sind die vier Antriebsmotoren 8 in einem elektronischen Gantrysystem miteinander gekoppelt.

Durch einen solchen Aufbau der erfindungsgemäßen Vorrichtung wird eine Modulbauweise erreicht. Dabei kann gemäß der gezeigten bevorzugten Ausführungsform jede vertikale Verfahreinheit problemlos und unabhängig von der anderen getauscht werden.

Um hohe Genauigkeiten, bei niedrigem Gewicht, hoher Stabilität und Verzicht auf unlösbare Schweißverbindungen zu erreichen, setzt sich das Achsgestell 9 gemäß der gezeigten bevorzugten Ausführungsform aus ebenen, gefrästen, eigensteifen Leichtmetallplatten zusammen.

Um die geforderten Genauigkeiten zu erreichen, sind die einzeln bearbeiteten Platten verstiftet und verschraubt.

Um die prozessbedingten Kräfte, Momente und Schwingungen aufzunehmen, sind die Platten mit optimierter Kontur in entsprechender Richtung angeordnet.

Die Bearbeitung der einzelnen Platten ist sehr einfach, da alle Stellen gut zugänglich sind und in einer Aufspannung bearbeitet werden. Verzug durch Schweißen oder nachträgliche Bearbeitung werden ausgeschlossen, da eine Bearbeitung nach der Montage entfällt.

Gemäß der gezeigten bevorzugten Ausführungsform ist jeder Achsgestellkörper 9 gewichts- und belastungsoptimiert, die einzelnen Leichtmetallplaten sind leicht austauschbar und ein nachträgliches Richten der Konstruktion entfällt. Die Plattenkonstruktion ist damit kostengünstig und gut verfügbar.

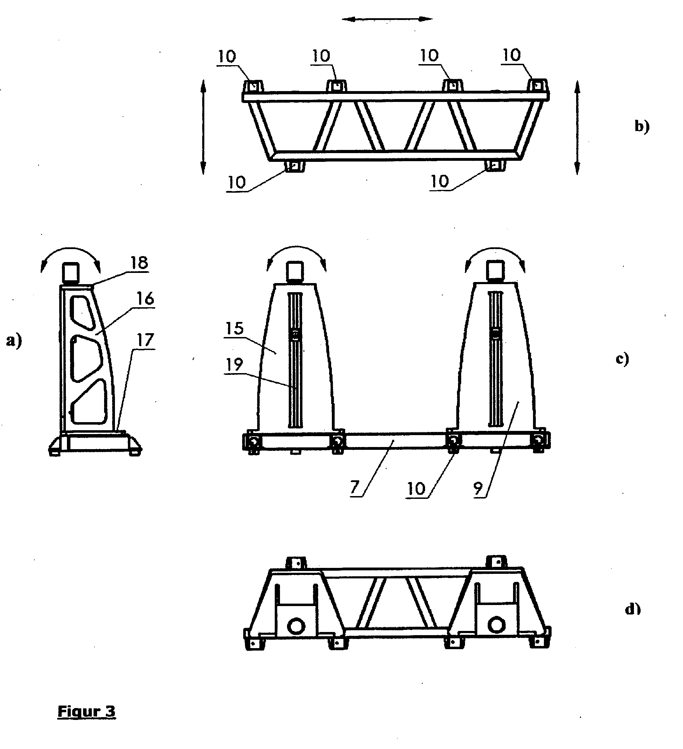

Gemäß der insbesondere in den Figuren 2 und 3 gezeigten Ausführungsform setzt sich ein Achskörper 9 aus fünf ebenen Platten zusammen.

Eine Führungsplatte 15 trägt dabei die Lineareinheit in Z-Richtung. Sie ist in X-Richtung ausgerichtet, damit ein optimaler ebener Spannungszustand erreicht wird, wenn Beschleunigungskräfte von Beschichter und Druckkopf wirken.

Rechtwinklig auf der Führungsplatte 15 angeordnet nehmen zwei parallele Stützplatten 16 Kräfte in Y-Richtung auf. Die Führungsplatte 15 und die Stützplatten 16 sind mit einer Bodenplatte 17 verbunden. Zusammen tragen sie eine Tragplatte 18, an der die Führungsspindel 19 hängt. Die Krafteinleitung erfolgt hier über eine hängend angeordnete Spindel.

Zur Ausrichtung werden zwei Z-Achskörper beziehungsweise Achsgestelle 9 auf einer Seite mit einem zweidimensionalen Schweißgestell, einem Bodengestell 7, verschraubt. Die Verbindungsflächen des Schweißgestells sind in einem Arbeitsgang überarbeitet. Somit ist eine gute Voraussetzung für die Ausrichtung der vertikalen Verfahreinheiten gegeben.

Jeder Verbund aus zwei vertikalen Verfahreinheiten beziehungsweise zwei Achsgestellen 9 und einem Bodengestell 7 ergibt wiederum ein unabhängiges, identisch zu fertigendes, platzsparendes und leicht austauschbares Modul. Zwei dieser Module ergeben gegenüberliegenden angeordnet die gesamte Z-Achse der Vorrichtung.

Dieser Verbund wird über, in X-, Y- und Z-Richtungen einstellbare Maschinenfüße 10 auf dem Boden verankert wie in Figur 3 gezeigt. Damit wird höchste Standfestigkeit bei guter Einstellbarkeit erreicht.

Um vollständige Einstellbarkeit jeder einzelnen Z-Achsverfahreinheit beziehungsweise Achsgestelle 9 zu erreichen, sind die Maschinenfüße 10 so unter jedem Z-Achskörper angeordnet, dass diese im Winkel zum Boden optimal eingestellt werden können. Dazu werden die einzelnen Maschinenfüße unterschiedlich in Z-Richtung verstellt.

Eine leichte elastische Verformung des Bodengestells beim Ausrichten wird hierfür in Kauf genommen, da die Gesamtsteifigkeit nicht verändert wird.

Die Einstellbarkeit spielt eine wichtige Rolle, da auch geringste Fertigungsfehler des Bodengestells 7 in den hoch aufragenden vertikalen Verfahreinheiten als große Lageabweichungen in Erscheinung treten.

Stehen die vertikalen Verfahreinheiten 9 trotz der Einstellung nicht in allen Richtungen ausreichend parallel, werden die Z-Lineareinheiten und die Anbindung des Tragrahmens 1 durch Zwangskräfte belastet bzw. zerstört, wenn nicht entsprechende Vorkehrungen bei der Auslegung der Führungen getroffen wurden.

Vorteilhafterweise wird dazu die Vorrichtung so gestaltet, dass sie statisch bestimmt gelagert ist. Dies kann beispielsweise mit Hilfe der so genannten Grüblergleichung erfolgen. Diese lautet.

$$F = B \cdot (n - 1 - g) + \sum b_i + \sum s_i$$

Dabei bedeuten die einzelnen Zeichen:

F: Freiheitsgrad
B: Bewegungstyp (B = 6 für räumliche Anordnungen)
G: Anzahl der Gelenke
$b_i$: Beweglichkeit des Gelenks i
$s_i$: eingehaltene Sonderabmessungen
n: Anzahl der Elemente

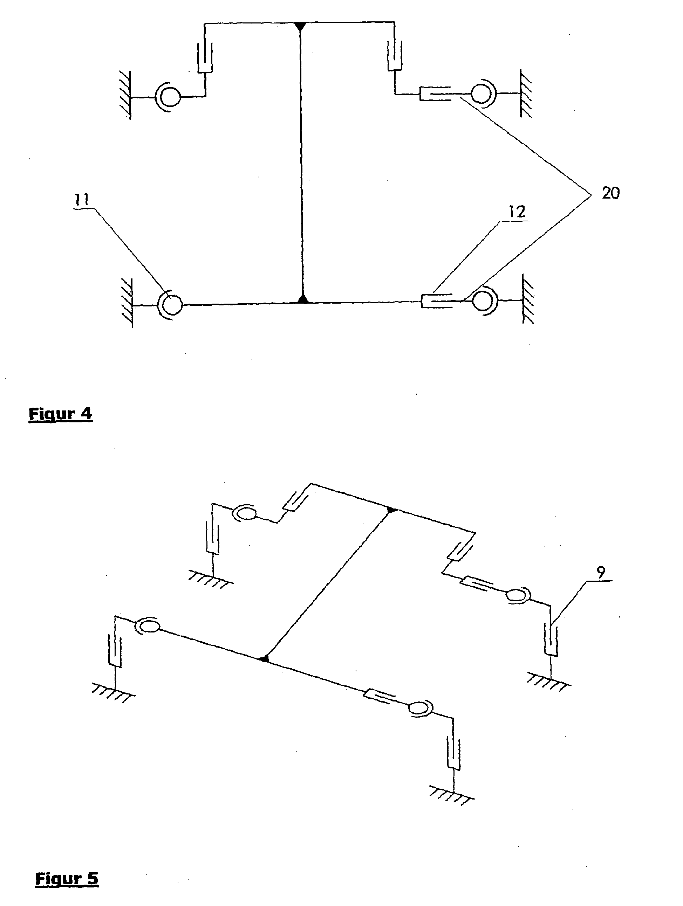

Betrachtet man die Lagerung des Tragrahmens 1 nach obiger Gleichung ohne die vertikale Beweglichkeit zu berücksichtigen, so kann man eine statisch bestimmte Lagerung gemäß Figur 4 finden. Der Tragrahmen 1 wird hierbei über eine Kombination von vier Gelenklagern, beispielsweise Kugelgelenklagern 11 mit je drei Freiheitsgraden und vier Drehlagern, wie beispielsweise Loslagerns 12 mit je zwei Freiheitsgraden an vier festen Aufhängepunkte fixiert.

Die Gesamtzahl der vorliegenden in Verbindung stehenden Konstruktionselemente beträgt 6, die Anzahl Gelenke 8.

Die Grüblergleichung ergibt dann:

$$F = 6 \cdot (6 - 1 - 8) + (4 \cdot 3 + 4 \cdot 2) = 2$$

Die zwei Freiheitsgrade betreffen dabei die Drehmöglichkeit der Elemente 20. Die gesamte Anordnung ist damit statisch bestimmt und bedarf keiner Sonderabmessungen.

Betrachtet man die Vorrichtung unter Einbeziehung der vertikalen Verfahreinheiten ergibt sich ein Modell gemäß Abbildung 5. Die vertikalen Verfahreinheiten werden dabei als reine Verschiebelager mit einem Freiheitsgrad modelliert. Die Grüblergleichung ergibt dann:

$$F = 6 \cdot (10 - 1 - 12) + (4 \cdot 3 + 4 \cdot 2 + 4) = 4$$

Die vier Freiheitsgrade betreffen wieder die beiden Drehfreiheitsgrade der Elemente 20 sowie die Drehung des Tragrahmens um die X - und die Y-Achse.

Auch in diesem Fall ist keine Sonderabmessung erforderlich, um die Lagerung statisch bestimmt auszuführen. Das bedeutet, auch im Falle einer Fehlfunktion der vertikalen Verfahreinheiten z.B. in Form des Ausbrechens einer Achse aus dem Verbund ist der Tragrahmen weiterhin statisch bestimmt und es ergeben sich keine Zwangskräfte.

Die Umsetzung des vereinfachten Lager-Modells kann gemäß einer besonders bevorzugten Ausführungsform der vorliegenden Erfindung erfolgen, indem der Tragrahmen 1 über zylindrische Lagerbolzen mit den vertikalen Verfahreinheiten des Z-Achssystem verbunden ist.

Im Tragrahmen 1 befinden sich Kugelgelenklager 11 die die Bolzen aufnehmen. Weiterhin sind auf einer Seite des Tragrahmens die Lagerbolzen in Y-Richtung lose in ihrer Aufnahme in der vertikalen Verfahreinheit gelagert.

Zwei gegenüberliegende Bohrungen für die Gelenklager 11 sind hierbei vorzugsweise im Tragrahmen 1 als Langlöcher in X-Richtung ausgeführt. Das Gelenklager 11 mit Bolzen kann sich so in X-Richtung bewegen und es entsteht eine Loslagerung des Tragrahmens in X-Richtung.

Dehnt sich der Rahmen bzw. das Z-Achssystem nun in X oder Y Richtung aus, wird die Änderung von den Loslagern aufgenommen. Sind die Ausdehnungen unterschiedlich, gleichen die Gelenklager 11 weitere Winkelfehler aus.

Die Gelenk und Loslagerung gleicht weiterhin Parallelversatzfehler, Winkelfehler und Längenfehler in X- und Y-Richtung der gegenüberliegenden Z-Achspaare aus.

Ursachen dieser Fehler können auf Montage und Fertigung zurückführbar sein.

Auch wird die Montage des Systems enorm erleichtert, da der Tragrahmen 1 bei der Montage räumlich noch nicht genau ausgerichtet sein muss.

Bei einer festen Verbindung zwischen vertikaler Verfahreinheit 9 und Tragrahmen 1 könnte, durch die enormen Hebelverhältnisse die Verbindung bereits bei der Montage beschädigt bzw. zerstört werden.

Weiterhin muss nur ein einziger Bolzen pro Z-Achse eingezogen und mit einer einzelnen Schraube fixiert werden. Dies erspart Zeit und Kosten bei Fertigung und Montage. Die vertikale Verfahreinheit 9 wird dabei wiederum zu einem leicht austauschbaren Modul.

Insgesamt weißt das gemäß einer besonders bevorzugten Ausführungsform beschriebene System eine hohe Genauigkeit und Steifigkeit auf, da möglichst formgenaue Platten verwendet werden, die durch Ihre Kontur und Ausrichtung optimal auf die Belastung eingestellt sind.

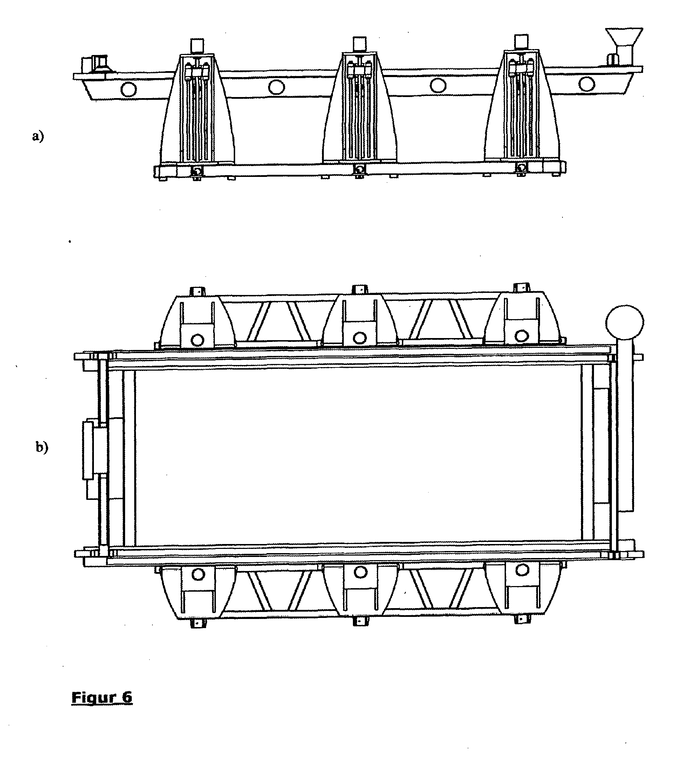

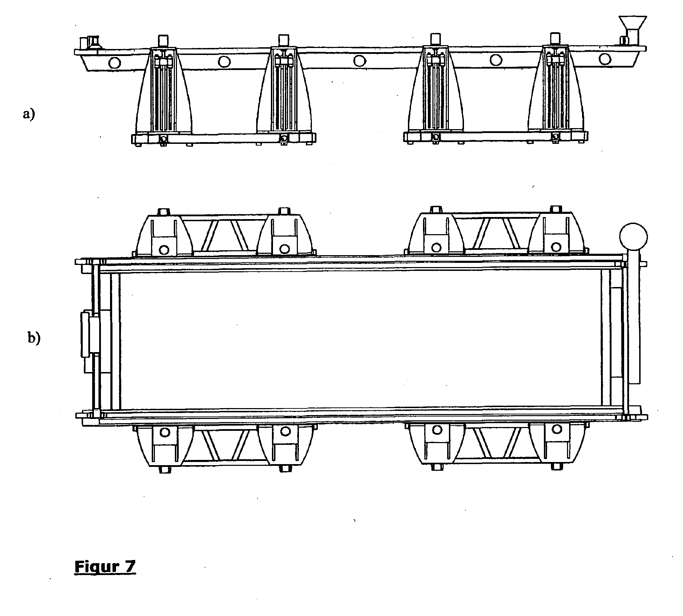

Durch die Modulbauweise mit wenigen, unabhängigen und identischen Baugruppen kann das System unabhängig und damit optimal ausgerichtet werden. Zudem ist die Vorrichtung mit geringem konstruktiven Aufwand an verschiedene Baugrößenerfordernisse anpassbar. So zeigen Figur 6 und Figur 7 Bauformen der erfindungsgemäßen Vorrichtung mit unterschiedlich langen Baufeldern. Die vertikalen Verfahreinheiten können baugleich zu der ursprünglichen Variante übernommen werden. Lediglich durch die Zahl und die Verteilung der einzelnen Module, wird dem erhöhten Gewicht aufgrund der größeren Länge des Tragrahmens Rechnung getragen.

Weiterhin ist auch kein über den normalen Anspruch an eine Fertigungsumgebung hinausgehendes Fundament notwendig, da eine optimale Einleitung der Kräfte in den Boden erfolgen kann. Es kann eine feste Verbindung der Z-Achse mit dem Boden über, die in X-,Y-,Z-Richtung einstellbaren Maschinenfüße 10 erreicht werden.

Geometrische Abweichungen durch Wärme, Fertigung, Montage und Verfahrfehler in Z-Richtung können durch eine vorteilhafte erfindungsgemäße Gelenkaufhängung und Festloslagerung auf einfachste Weise ausgeglichen werden.

Bezugszeichenliste

1    Tragrahmen
2    Verfahreinheiten in X-Richtung
3    Beschichter
4    Druckkopf

| 6  | Aufhängepunkte |
|----|----|
| 7  | Bodengestell |
| 8  | Antriebsmotor |
| 9  | Achsgestell, Verfahreinheit in Z-Richtung |
| 10 | Maschinenfuß |
| 11 | Gelenklager |
| 12 | Loslager |
| 15 | Führungsplatte |
| 16 | Stützplatte |
| 17 | Bodenplatte |
| 18 | Tragplatte |
| 19 | Führungsspindel |
| 20 | Maschinenteil mit Drehfreiheitsgrad |

**Patentansprüche**

1. Vorrichtung zum Herstellen dreidimensionaler Modelle mittels 3-D Druckverfahren, wobei eine Bauplattform zum Aufbringen von Baumaterial vorgesehen ist und ein Tragrahmen (1) um die Bauplattform angeordnet ist, an dem über Linearführungen zumindest eine Dosiervorrichtung für Partikelmaterial und eine Verfestigungseinrichtung für Partikelmaterial angebracht sind und der Tragrahmen in einer Z-Richtung, das heißt im wesentlichen senkrecht zu einer Grundfläche der Bauplattform mittels mindestens zwei an dem Tragrahmen (1) vorgesehener vertikaler Verfahreinheiten verfahrbar ist, **dadurch gekennzeichnet, dass** die Verfahreinheiten jeweils gesonderte Bauteile darstellen, voneinander unabhängig am Tragrahmen (1) anordenbar sind und in Lage und Ausrichtung unabhängig voneinander einstellbar sind.

2. Vorrichtung nach Anspruch 1, **dadurch gekennzeichnet, dass** mindestens zwei vertikale Verfahreinheiten über ein Tragwerk verbunden sind.

3. Vorrichtung nach Anspruch 2, **dadurch gekennzeichnet, dass** das Tragwerk elastisch verformbar ist.

4. Vorrichtung nach einem der vorhergehenden Ansprüche, **dadurch gekennzeichnet, dass** jede Verfahreinheit (2, 9) mit dem Tragrahmen (1) an einem Aufhängepunkt in Eingriff steht und gesondert in Z-Richtung verfahrbar ist.

5. Vorrichtung nach Anspruch 2, **dadurch gekennzeichnet, dass** das Tragwerk und/oder jede vertikale Verfahreinheit mindestens drei vertikal einstellbare Füße aufweist.

6. Vorrichtung nach einem der vorhergehenden Ansprüche, **dadurch gekennzeichnet, dass** die Aufhängepunkte des Tragrahmens (1) Besselpunkte darstellen.

7. Vorrichtung nach einem der vorhergehenden Ansprüche, **dadurch gekennzeichnet, dass** die Verfahreinheit (2, 9) eine Lineareinheit vorzugsweise aufweisend einen Linearantrieb, einen Antriebsmotor und eine Linearführung, umfasst.

8. Vorrichtung nach Anspruch 7, **dadurch gekennzeichnet, dass** die Antriebsmotoren über ein elektronisches Gantrysystem miteinander gekoppelt sind.

9. Vorrichtung nach einem der vorhergehenden Ansprüche, **dadurch gekennzeichnet, dass** die Verfahreinheiten (2, 9) Platten aufweisen, die durch Verstiften und/oder Verschrauben und/oder Vernieten und/oder Kleben miteinander verbunden sind.

10. Vorrichtung nach Anspruch 9, **dadurch gekennzeichnet, dass** die Platten eine zum Aufnehmen hoher Kräfte optimierte Kontur aufweisen.

11. Vorrichtung nach einem der vorhergehenden Ansprüche,

**dadurch gekennzeichnet, dass** der Tragrahmen (1) über Lagerbolzen und Kugelgelenklager mit den Verfahreinheiten (2, 9) in Eingriff steht.

**Claims**

1. A device for producing three-dimensional models by means of 3D printing methods, wherein a construction platform for applying construction material is provided and a support frame (1) is arranged around the construction platform, at least one metering device for particulate material and one solidifying means for particulate material being mounted to said support frame (1) via longitudinal guides and the support frame being displaceable in Z direction, i.e. substantially perpendicular to a base of the construction platform, by means of at least two vertical displacement units provided on the support frame (1), **characterised in that** the displacement units each constitute separate parts, are each independently disposable on the support frame (1) and are each independently adjustable in position and direction.

2. The device according to claim 1, **characterised in that** at least two vertical displacement units are connected to each other via a supporting structure.

3. The device according to claim 2, **characterised in that** the supporting structure is elastically deformable.

4. The device according to any one of the preceding claims, **characterised in that** each displacement unit (2, 9) engages with the support frame (1) at a suspension point and is individually displaceable in Z direction.

5. The device according to claim 2, **characterised in that** the supporting structure and/or each vertical displacement unit comprises at least three vertically adjustable feet.

6. The device according to any one of the preceding claims, **characterised in that** the suspension points of the support frame (1) constitute Bessel points.

7. The device according to any one of the preceding claims, **characterised in that** the displacement unit (2, 9) comprises a linear unit which preferably includes a linear drive, a drive motor and a linear guide.

8. The device according to claim 7, **characterised in that** the drive motors are coupled with each other via an electronic gantry system.

9. The device according to any one of the preceding claims, **characterised in that** the displacement units (2, 9) comprise plates which are connected to each other by pins and/or screws and/or rivets and/or adhesion.

10. The device according to claim 9, **characterised in that** the plates have a contour which is optimised to withstand high forces.

11. The device according to any one of the preceding claims, **characterised in that** the support frame (1) engages with the displacement units (2, 9) via bearing bolts and ball joint bearings.

**Revendications**

1. Dispositif de fabrication de modèles tridimensionnels au moyen de procédés d'impression 3D, dans lequel une plateforme de construction est prévue pour l'application de matériau de construction et un bâti (1) est disposé autour de la plateforme de construction, au moins un dispositif de dosage de matériau en particules et un moyen de solidification de matériau en particules étant montés sur le bâti (1) par des guides linéaires et ledit bâti étant déplaçable dans une direction Z, c'est-à-dire une direction sensiblement perpendiculaire par rapport à une base de la plateforme de construction, au moyen d'au moins deux unités de déplacement verticales disposées sur le bâti (1), **caractérisé en ce que** chacune des unités de déplacement constitue un élément individuel, **en ce qu'**elles peuvent être disposées sur le bâti (1) de manière indépendante et **en ce qu'**elles sont réglables indépendamment en position et en direction.

2. Dispositif selon la revendication 1, **caractérisé en ce qu'**au moins deux unités de déplacement verticales sont reliées l'une à l'autre par un système porteur.

**3.** Dispositif selon la revendication 2, **caractérisé en ce que** le système porteur est élastiquement déformable.

**4.** Dispositif selon l'une quelconque des revendications précédentes, **caractérisé en ce que** chaque unité de déplacement (2, 9) vient en prise avec le bâti (1) à un point de suspension et **en ce qu'**elle est déplaçable individuellement dans la direction Z.

**5.** Dispositif selon la revendication 2, **caractérisé en ce que** le système porteur et/ou chaque unité de déplacement verticale comporte au moins trois pieds réglables verticalement.

**6.** Dispositif selon l'une quelconque des revendications précédentes, **caractérisé en ce que** les points de suspension du bâti (1) constituent des points de Bessel.

**7.** Dispositif selon l'une quelconque des revendications précédentes, **caractérisé en ce que** l'unité de déplacement (2, 9) comporte une unité linéaire qui présente de préférence un entraînement linéaire, un moteur d'entraînement et un guide linéaire.

**8.** Dispositif selon la revendication 7, **caractérisé en ce que** les moteurs d'entraînement sont couplés entre eux par un système gantry électronique.

**9.** Dispositif selon l'une quelconque des revendications précédentes, **caractérisé en ce que** les unités de déplacement (2, 9) comportent des plaques qui sont reliées entre eux par goupillage et/ou par vissage et/ou par rivure et/ou par collage.

**10.** Dispositif selon la revendication 9, **caractérisé en ce que** lesdites plaques présentent un contour optimisé pour absorber des forces importantes.

**11.** Dispositif selon l'une quelconque des revendications précédentes, **caractérisé en ce que** le bâti (9) vient en prise avec les unités de déplacement (2, 9) par des boulons de coussinet et des paliers à rotule.

**Figur 1a**

**Figur 1b**

**Figur 2**

**Figur 3**

11

12

20

**Figur 4**

9

**Figur 5**

a)

b)

**Figur 6**

a)

b)

**Figur 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0431924 B1
- EP 0644809 B1
- DE 102006030350 A1
- WO 2005097476 A2
- EP 1872928 A1
- DE 10053741 C1